# EUROPEAN PATENT APPLICATION

(11) **EP 1 679 577 A1**
(43) Date of publication of application: **12.07.2006**
(21) Application number: 05445003.6
(22) Date of filing: 10.01.2005
(51) Int. Cl.: G06F 3/00, G06F 3/033

(54) **Adaptive display of eye controllable objects**

(71) Applicant: Tobii Technology AB, 182 53 Danderyd (SE)
(72) Inventor: Bouvin, Johan, 131 65 Nacka (SE); Eskilsson, Henrik, 182 39 Danderyd (SE); Jacobson, Magnus, 172 33 Sundbyberg (SE)
(74) Representative: Wihlsson, Joakim Per Magnus

(57) **Abstract**

The present invention relates to a solution for displaying information on a display of a computer based on an eye-tracking data signal, which describes a user's point of regard on the display. An array (310) of manipulable objects (310a-310x) is shown on the display. Each of these objects extends over a respective idle region and graphically represents a GUI-component that is controllable in response to the eye-tracking data signal. The display also shows a modification zone (300) displaying a graphically modified representation (310cₘ-310gₘ) of at least one of the objects in the array (310). Each representation (310cₘ-310gₘ) in the zone (310) extends over a respective active region, which is larger than the idle region. Moreover, within the modification zone (300), exclusively objects in the array (310) of manipulable objects are extended with respect to a covered area on the display, i.e. any portions of the display within the modification zone that represent non-manipulable objects are left unaffected, are partially or entirely hidden and/or are size-reduced. An estimated point of regard (125) is determined from the eye-tracking data signal and the respective position of the objects (310a-310x) in the array (310) are shifted (S) relative to the modification zone (300), so that a particular set of objects (310cₘ-310gₘ) are represented in this zone (300) depending on the location of the estimated point of regard (125).

## Description

### THE BACKGROUND OF THE INVENTION AND PRIOR ART

The present invention relates generally to computer based eye-tracking systems. More particularly the invention relates to a computer system according to the preamble of claim 1 and a method according to the preamble of claim 14. The invention also relates to a computer program according to claim 27 and a computer readable medium according to claim 28.

Human computer interaction has been revolutionized by the graphical user interface (GUI). Namely, this interface provides an efficient means for presenting information to a user with a bandwidth which immensely exceeds any prior channel. Over the years the speed at which information can be presented has increased further through color screens, enlarged displays, intelligent graphical objects (e.g. pop-up windows), window tabs, menus, toolbars and sounds. During this time, however, the input devices have remained essentially unchanged, i.e. the keyboard and the pointing device (e.g. mouse, track ball or touch pad). In recent years, various handwriting devices have also been introduced (e.g. in the form of a stylus or graphical pen). Nevertheless, while the output bandwidth has multiplied several times, the input ditto has been substantially unaltered. Consequently, a severe asymmetry in the communication bandwidth in the human computer interaction has occurred.

In order to compensate for this asymmetry, various attempts have been made to use eye-tracking devices. For instance, the patent documents US, 5,850,211, US2002/0180799 and US, 6,603,491 describe different methods and systems for displaying information on computer screens in response to signals that reflect a user's gaze location.

Unfortunately, the known eye-controlled solutions often fail to accomplish a fully satisfying user-interaction with the computer. One common problem is that the eye-controllable input interfaces impose comparatively heavy motor tasks on the user's eyes. This may lead to fatigue symptoms and discomfort experienced by the user. Another problem is that the user, who perhaps is a handicapped person, may have problems to control his/her gaze with sufficiently high precision to control the computer as desired based on the eye-tracking signal. Of course, this problem is particularly accentuated if the eye-controllable screen objects are small. Additionally, even if the user is capable of controlling his/her gaze with very high precision, imperfections in the eye-tracking equipment may introduce measurement errors in respect of an estimated point of regard on the display.

Moreover, the screen area available for eye-controllable objects on a computer display is limited, and in order to attain a functional and efficient user interface it is generally desirable to include as much information and controls as possible in each application window (or view). Therefore, the on-screen representations of any eye-controllable GUI-objects need to be made as small as possible.

### SUMMARY OF THE INVENTION

The object of the present invention is therefore to offer a solution which alleviates the above problems and thus provides an effortless and reliable tracking of a user's gaze on a display while at the same time allowing a comparatively high information density on the display.

According to one aspect of the invention, the object is achieved by the initially described computer system for displaying information, wherein the data processing system includes a repositioning means, which is adapted to shift a respective position of the objects in the array of manipulable objects relative to a position of the modification zone on the display in response to the eye-tracking data signal. Additionally, the enlargement means is adapted to exclusively cause a region extension on the display in respect of the objects in the array of manipulable objects. Hence, any portions of the display within the modification zone that represent non-manipulable objects are left unaffected, partially or entirely hidden and/or are size-reduced.

This system is advantageous because, on one hand, it strikes an excellent balance between information density on the display and gaze tracking precision. On the other hand, by exclusively extending the graphically modified representations of the manipulable objects within the modification zone, the system provides an intuitive and efficient user interface to the computer.

According to a preferred embodiment of this aspect of the invention, the modification zone has such dimensions in relation to a respective dimension of the graphically modified representations of the objects in the array of manipulable objects that the zone is capable of simultaneously showing representations of two or more of the objects in the array. The enlargement means is also adapted to graphically modify each object within the modification zone separately depending on the object's position relative to a boundary of the zone. Thereby, for example a centrally located representation of an object, a representation adjoining a particular boundary side of the zone or a representation recently introduced into the modification zone may be made larger than other objects in the zone and/or be highlighted. This further enhances the system's user friendliness.

According to another preferred embodiment of this aspect of the invention, the enlargement means is adapted to allocate an active region to a representation of a particular manipulable object within the modification zone, where the active region depends on an activation distance between the representation and a representation having a largest active region. Specifically, the representation of the particular manipulable object is allocated a relatively large active area if the activation distance is comparatively short, and vice versa, a relatively small active area is allocated if the activation distance is comparatively long. Hence, graphically modified representations of objects close to the user's estimated point of regard can be made large, whereas representations of objects located more remote from this point can be made gradually smaller.

According to yet another preferred embodiment of this aspect of the invention, the repositioning means is adapted to position the modification zone relative to the objects in the array of manipulable objects, such that the zone always extends over at least one of the objects. Thereby, the zone provides a magnification window over the array. Alternatively, the modification zone represents a separate area on the display positioned outside all the objects in the array. In this case, modification zone allows the objects in the array to be unaffected while the zone presents a graphically modified representation of one or more of these objects. Both these strategies may be advantageous depending on the application.

According to a preferred embodiment of this aspect of the invention, the repositioning means is adapted to shift the objects in the array of manipulable objects relative to the modification zone on the display, such that the objects are repositioned on the display while the modification zone is stationary at particular coordinates on the display. As an alternative, or a complement thereto, the repositioning means can be adapted to shift the modification zone relative to the objects in the array of manipulable objects on the display, such that the modification zone is repositioned on the display while the objects remain stationary at respective coordinates on the display. Depending on the number of objects and the graphical complexity of each object in the array, it may be advantageous to move either the objects or the modification zone across the display. In some applications, it is even desirable to allow both the zone and the objects to move. For instance, when scrolling in the middle of the array the modification zone may have a fixed position on the display while the graphically modified representations of the objects slide through it. However, when the scrolling procedure approaches an end section of the array, the objects' movement may stop while instead the modification zone slides over the display towards the end of the array.

According to still another preferred embodiment of this aspect of the invention, the repositioning means is adapted to iteratively shift the respective positions of the objects in the array of manipulable objects relative to the position of the modification zone on the display at a shifting speed, which depends on a control distance between a user's estimated point of regard on the display in relation to a location of the modification zone on the display. Here, a relatively long control distance results in a comparatively high shifting speed, and a relatively short control distance results in a comparatively low shifting speed. This function is desirable because thereby the scrolling speed will be high when the modification zone is located far from a target object, and low in proximity thereto. Naturally, this improves the usability and efficiency of the proposed system.

According to another preferred embodiment of this aspect of the invention, each object in the array of manipulable objects represents a selected example of an item in a logic sequence of items containing a plurality of further items in addition to the items represented by the manipulable objects. Hence, a number of non-shown further items are logically organized sequentially between each object in the array of manipulable objects. Further, the enlargement means is adapted to display a graphical representation of at least one of the further items in the modification zone, which is organized within a logical proximity distance from a first object in the array of manipulable objects when the repositioning means has positioned the modification zone relative to the objects in the array of manipulable objects, such that the zone displays the graphically modified representation of the first object. Hence, whenever the user focuses his/her attention elsewhere on the display, the array may be collapsed to show only a few of the objects actually included in the array. Of course, this saves valuable display area.

According to yet another preferred embodiment of this aspect of the invention, the data processing system is associated with a selecting means adapted to: define an identified object in the array of manipulable objects based on the eye-tracking data signal; receive a user generated selection command in respect of the identified object; and effect at least one operation in the computer system in response to the selection command. The selection command may either be generated as a result of that the user's gaze has been fixed towards the identified object during a predetermined dwell time, or the selection command may be generated via a different interface, such as a computer mouse, a keyboard or a voice interface.

According to another preferred embodiment of this aspect of the invention, the object displaying means is adapted to show a first and a second object in the array of manipulable objects on the display at an idle distance from one another outside the modification zone. However, within the modification zone, the enlargement means is adapted to display a first graphically modified representation of the first object and a second graphically modified representation of the second object, such that the graphically modified representations are separated from one another by an active distance, which exceeds the idle distance. As a result, the graphically modified representations of the objects need not be larger than the corresponding idle versions of the objects. In fact, the appearance and size of these objects may be exactly the same both outside and within the modification zone. An effective region extension on the display is instead accomplished by the increased separation between the objects within the modification zone. This solution may be preferable in some applications, since it provides a calmer graphics behavior on the display.

According to another aspect of the invention the object is achieved by the method as initially described, wherein the eye-tracking data signal is received. A respective position of the objects in the array of manipulable objects is shifted relative to a position of the modification zone on the display in response to the eye-tracking data signal. Within the modification zone, exclusively objects in the array of manipulable objects are extended with respect to a covered area on the display.

The advantages of this method, as well as the preferred embodiments thereof, are apparent from the discussion hereinabove with reference to the proposed computer system.

According to a further aspect of the invention the object is achieved by a computer program, which is directly loadable into the internal memory of a computer, and includes software for controlling the above proposed method when said program is run on a computer.

According to another aspect of the invention the object is achieved by a computer readable medium, having a program recorded thereon, where the program is to control a computer to perform the above proposed method.

Further advantages, advantageous features and applications of the present invention will be apparent from the following description and the dependent claims.

### BRIEF DESCRIPTION OF THE DRAWINGS

The present invention is now to be explained more closely by means of preferred embodiments, which are disclosed as examples, and with reference to the attached drawings.
- Figure 1: shows an overview picture of a user controlling a computer apparatus according to the invention;
- Figure 2: shows a block diagram over a data processing system according to one preferred embodiment of the invention;
- Figures 3a-9b: illustrate proposed procedures of repositioning the objects in an array of manipulable objects and/or a modification zone in response to an eye-tracking data signal according to nine different preferred embodiments of the invention; and
- Figure 10: illustrates, by means of a flow diagram, a general method for controlling a computer system according to the invention.

### DESCRIPTION OF PREFERRED EMBODIMENTS OF THE INVENTION

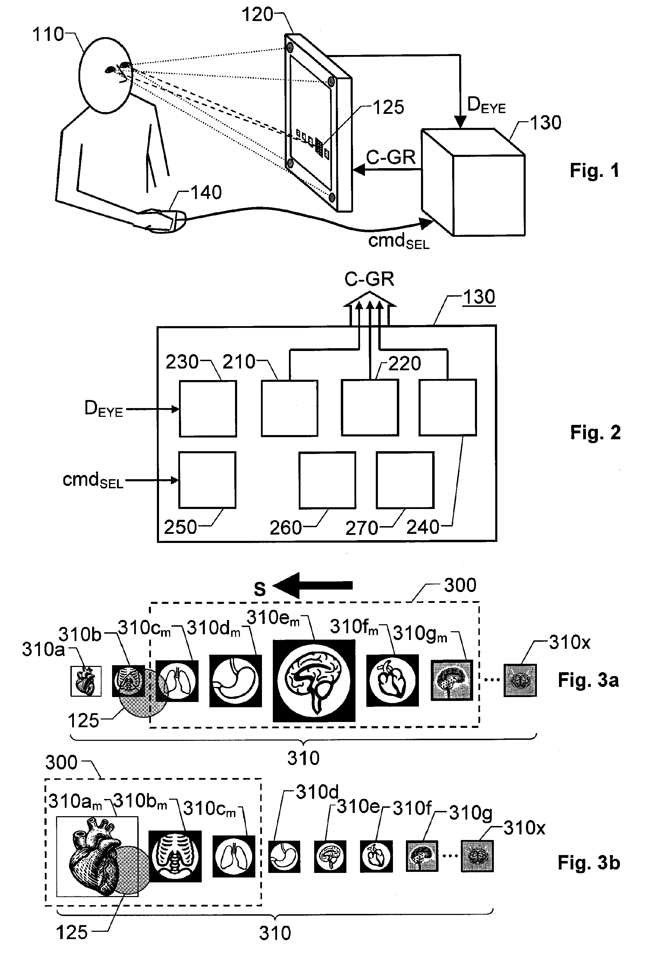

Figure 1 shows an overview picture of a typical use-case according to the invention. Here, a user 110 controls a data processing system 130 (such as a computer), at least partly based on an eye-tracking data signal D_{EYE}, which describes the user's 110 point of regard 125 on a display 120. Thus, by viewing representations of GUI-components on the display 120, the user 110 can generate commands to the system 130. Preferably, the user 110 may also produce commands cmd_{SEL} to the system 130 via one or more alternative input interfaces, for instance a computer mouse 140.

The GUI-components are adapted to be influenced by the eye-tracking data signal D_{EYE}, which enables the eye-controlled manipulation. The invention presumes that the eye-tracking data signal D_{EYE} may result in events, which are related to any task performable by the computer apparatus. It should be noted that according to the invention, any type of known computer screen or monitor, as well as combinations of two or more separate displays might represent the display 120. For example, the display 120 may constitute a pair of stereoscopic screens, a heads-up display (HUD), a head-mounted display (HMD) and a presentation means for a virtual environment, such as the eyepieces of a pair of 3D-glasses or a room where the walls include projection screens for presenting a virtual environment.

Naturally, in order to produce the eye-tracking data signal D_{EYE}, the display 120 is associated with, or includes, an eye-tracker. This unit is not a subject of the present patent application, and will therefore not be described in detail here. However, the eye-tracker is preferably embodied by the solution described in the Swedish patent application 0203457-7, filed on 21 November 2002 in the name of the applicant.

The data processing system 130 produces a graphics control signal C-GR which causes the display 120 to show graphical representations of a number of eye-controllable GUI-components. Further details regarding this procedure will be described below with reference to the figures 2 - 10.

Preferably, the graphics control signal C-GR also accomplishes visual feedback information on the display 120. This information is generated in response to any user-commands received by the computer apparatus 130, so as to confirm to the user 110 any commands, which may be based on the eye-tracking data signal D_{EYE}. Such a confirmation is especially desirable when the commands are produced by means of perceptive organs, for example the human eyes.

Figure 2 shows a block diagram over a data processing system 130 according to one preferred embodiment of the invention. The system 130 includes an object displaying means 210, an enlargement means 220, a repositioning means 240, a central processor 260 and a memory unit 270.

The object displaying means 210 is adapted to show an array of manipulable objects on a display, such as 120 in the figure 1. On the display, each manipulable object extends over a respective idle region. Moreover, each of these manipulable objects graphically represents a GUI-component, which is controllable in response to an eye-tracking data signal D_{EYE} that describes a user's point of regard on the display. Thus, the user's ocular activity in respect of the display may produce commands and other input data to the system 130.

The enlargement means 220 is adapted to display a modification zone on the display. The modification zone, which will be described in much further detail below with reference to the figures 3a - 9b, shows a graphically modified representation of at least one of the objects in the array of manipulable objects. Each graphically modified representation extends over a respective active region within the modification zone which is larger than the idle region of the corresponding object (i.e. when located outside the modification zone). Moreover, the enlargement means 220 exclusively causes a region extension on the display in respect of the objects in the array of manipulable objects. Consequently, any portions of the display within the modification zone that represent non-manipulable objects are left unaffected, partially or entirely hidden and/or are size-reduced.

The repositioning means 240 is adapted to shift a respective position of the objects in the array of manipulable objects relative to a position of the modification zone on the display in response to the eye-tracking data signal D_{EYE}.

In addition to the above, the data processing system 130 preferably includes an interface unit 230, which is adapted to receive the eye-tracking data signal D_{EYE}. Moreover, the system 130 is preferably associated a selection means 250, which is adapted to receive user generated selection commands cmd_{SEL}, for instance from a computer mouse, a track ball, a touch pad, a switch, a button, a keyboard or a voice interface. The selecting means 250 defines an identified object in the array of manipulable objects in response to the eye-tracking data signal D_{EYE}. Then, the selecting means 250 receives a user generated selection command cmd_{SEL} in respect of the identified object. Thereafter, as a result of this command, one or more operations can be effected in a computer system, such as the system 130 itself.

Figure 3a shows an array 310 of manipulable objects 310a, 310b, ..., 310x, which are presented on a display. As mentioned above, each object graphically represents a GUI-component that is controllable in response to an eye-tracking data signal, and each object located outside a modification zone 300 extends over an idle region. The modification zone 300 displays graphically modified representations 310cₘ, 310dₘ, ..., 310gₘ of a number of the manipulable objects 310c, 310d, ..., 310g in the array 310. Each such graphically modified representation extends over a respective active region within the modification zone 310 which is larger than the idle region. Thus, an adequate measurement of a user's point of regard 125 in respect of the objects within the modification zone 300 is facilitated.

Preferably, the modification zone 300 has such dimensions in relation to the dimensions of the graphically modified representations 310cₘ, 310dₘ, ..., 310gₘ of the objects in the array 310, that the zone 300 is capable of simultaneously showing such representations of two or more of the objects in the array 310. Moreover, each object 310cₘ, 310dₘ, ..., 310gₘ within the modification zone 300 is separately modified depending on the object's position relative to a boundary of the zone 300. In this example, a centrally object 310eₘ initially has a largest active region. However, according to the invention, the positions of the objects 310a, 310b, ..., 310x in the array 310 of manipulable objects are shifted relative to a position of the modification zone 300 on the display 120 in response to the eye-tracking data signal, so that in a steady state a largest object is presented at the estimated position of the point of regard 125 on the display. In the example shown in the figure 3a, the point of regard 125 is first located approximately over an object 310b, i.e. close to a leftmost border region of the zone 300. Therefore, the zone 300 is shifted left in relation to the array 310 (i.e. along an arrow S).

Figure 3b shows a situation where the zone 300 has reached the beginning of the array 310 and the estimated point of regard 125 is located over a graphically modified representation 310aₘ of an object 310a. Consequently, the graphically modified representation 310aₘ has the largest active area of the objects within the zone 300.

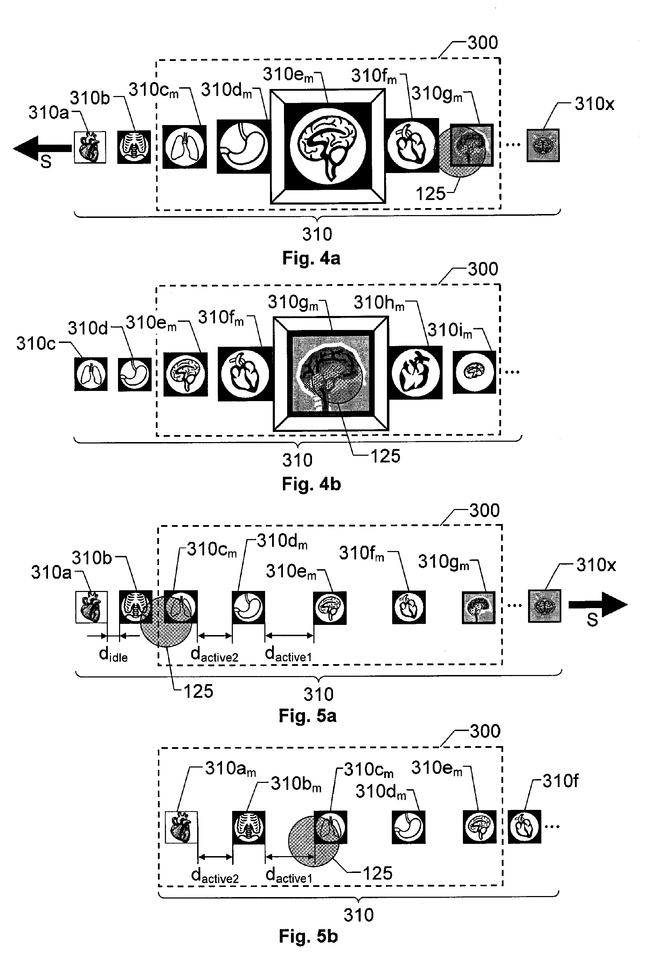

Figures 4a and 4b illustrate another proposed procedure of repositioning the array 310 of manipulable objects 310a, 310b, ..., 310x and the modification zone 300 in response to an eye-tracking data signal. Here, the modification zone 300 remains stationary at particular coordinates on the display. If the estimated point of regard 125 is located at position other than over a central graphically modified representation 310eₘ of an object 310e in the array 310, the objects in the array 310 are shifted so that the viewed object is located in the center of the zone 300. In the figure 4a, the estimated point of regard 125 is initially located over a graphically modified representation 310gₘ positioned to the right of the central representation 310eₘ. Hence, the objects in the array 310 of manipulable objects are shifted S left. In figure 4b, however, the representation 310gₘ is centrally positioned and located under the estimated point of regard 125. Therefore, no further shifting is performed. Also in this case, a largest active region is allocated to the manipulable object which is positioned at the estimated steady-state point of regard 125 (i.e. in the central position when the shifting operation has stopped). This improves the chances of tracking the user's point of regard 125 accurately when a high accuracy is most important, namely in connection with a selection command in respect of a GUI-component.

Figures 5a and 5b illustrate yet another proposed procedure of repositioning an array 310 of manipulable objects and a modification zone 300 in response to an eye-tracking data signal. In the figure 5a, the modification zone 300 includes graphically modified representations 310cₘ, 310dₘ, ... , 310gₘ of the objects 310a, 310b, ... , 310g in the array 310. It should be noted that, according to this embodiment of the invention, objects in the array 310 which are located outside the modification zone 300 are shown at an idle distance d_{idle} from one another. First and second objects 310a and 310b respectively constitute examples of such objects. However, within the modification zone 300, graphically modified representations 310cₘ, 310dₘ, 310eₘ, 310fₘ, and 310gₘ of five of the objects in the array 310 are more separated, i.e. a first active distance d_{active1} between a centrally located representation 310eₘ and its closest neighboring representations 310dₘ and 310fₘ respectively, and a second active distance d_{active2} between each of the neighboring representations 310dₘ and 310fₘ and their respective neighbors 310cₘ and 310gₘ both exceed the idle distance d_{idle}. Preferably, the first active distance d_{active1} also exceeds the second active distance d_{active2} (i.e. d_{active1} > d_{active2}).

In the figure 5a, the point of regard 125 is approximately located over the representation 310cₘ (i.e. close to a leftmost border of the zone 300), and the repositioning procedure (which may be implemented by the repositioning means 240 of figure 2) aims at arranging the objects in the array 310 relative to the zone 300, such that a viewed object is located centrally in the modification zone 300. Therefore, the objects in the array 310 are shifted right along the arrow S.

In the figure 5b, the graphically modified representation 310cₘ is located centrally in the zone 300 and its position coincides sufficiently well with the position of the estimated point of regard 125. Therefore, the objects in the array 310 are not shifted any further (provided that the point of regard 125 remains stationary at this position). Now, the first active distance d_{active1} separates the 310cₘ from its neighboring representations 310bₘ and 310dₘ respectively. Correspondingly, the second active distance d_{active2} separates the representation 310bₘ from its other neighboring representation 310aₘ, and the second active distance d_{active2} also separates the representation 310bdₘ from its other neighboring representation 310eₘ. An advantage attained by such an increase of the distances between the graphically modified representations in the modification zone is that the representations need not be larger than the corresponding idle versions of the objects 310a, 310b, ... , 310x in the array 310 in order to achieve the desired improvement of the gaze-tracking reliability. Instead, the design and the size of these objects may be exactly the same both outside and within the modification zone 310.

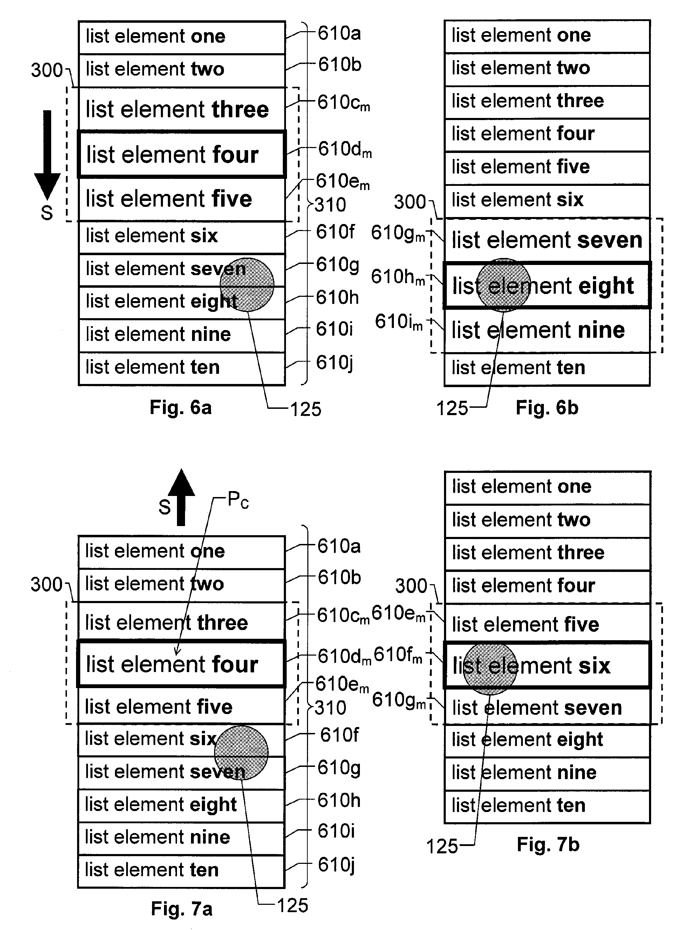

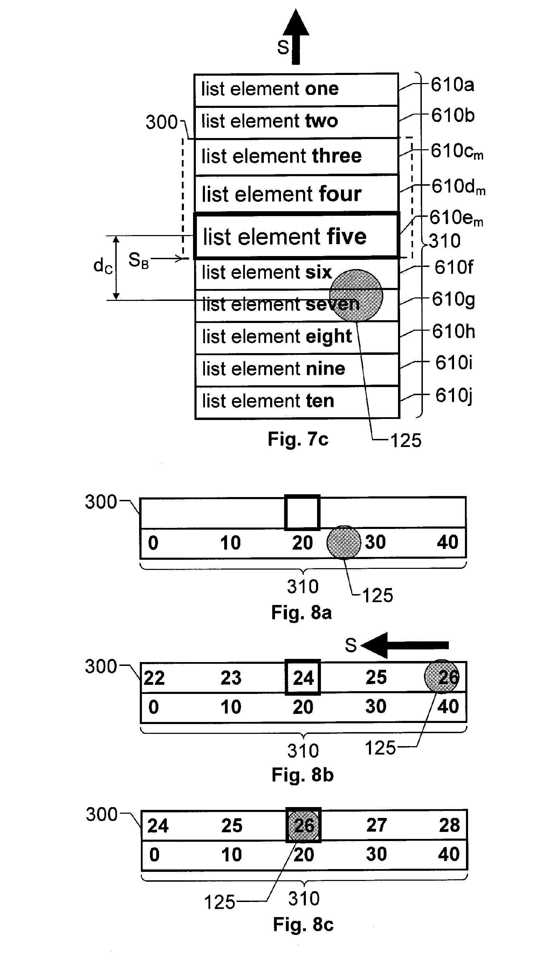

Figures 6a and 6b illustrate another proposed procedure of repositioning an array 310 of manipulable objects 610a, 610b, ..., 610j and a modification zone 300 in response to an eye-tracking data signal. Here, we presume that the array 310 is stationary on the display and that the zone's 300 position may be shifted relative to the objects in the array 310. The zone 300 simultaneously covers three graphically modified representations of the objects in the array 310, for instance 610dₘ, 610eₘ, and 610fₘ as shown in the figure 6a. Moreover, according to a preferred embodiment of the invention, the modification zone 300 is positioned relative to the objects in the array 310, such that the zone 300 always extends over at least one of these objects. As can be seen, the active area for each graphically modified representation within the zone 300 is the same. However, according to the invention, this need not be the case. For example, the representations may instead have gradually varying sizes, as illustrated in the figures 3a - 5b or as shown in figure 7c.

The figure 6a shows a situation where a user's point of regard 125 is estimated to be located over objects 610g and 610h below the zone 300. Consequently, the modification zone 300 is shifted S down in relation to the objects in the array 310. In figure 6b the zone 300 has been placed, such that it covers graphically modified representations 610gₘ, 610hₘ and 610iₘ of the objects 610g, 610h and 610i respectively. The estimated point of regard 125 is now placed over the representation 610hₘ, which is centrally located within the zone 300. Therefore, no further shifting occurs as long as the estimated point of regard 125 is stationary here.

Figures 7a and 7b illustrate a proposed procedure of repositioning an array 310 of manipulable objects 610a, 610b, ..., 610j and a modification zone 300 in response to an eye-tracking data signal similar to the procedure described above. Here, however, the modification zone 300 is shifted relative to the objects in the array 310, such that the zone 300 is stationary at particular coordinates on the display and the objects in the array 310 are repositioned. Moreover, a largest active region is allocated to a graphically modified representation of a manipulable object (610dₘ in the figure 7a) which is positioned closest to a center point P_{C} of the modification zone 300. The other two representations (610cₘ and 610eₘ in the figure 7a) in the modification zone 300 are allocated a somewhat smaller active region, which nevertheless is more extended than the respective idle region outside the zone 300.

In figure 7a, the point of regard 125 is estimated to be placed over objects 610f and 610g in the array 310, i.e. below the zone 300. As a result, the objects in the array 310 are shifted S up in relation to the modification zone 300. In figure 7b, the array 310 and its objects have been placed relative to the zone 300, such that the modification zone 300 covers graphically modified representations 610eₘ, 610fₘ and 610gₘ of the objects 610e, 610f and 610g respectively. Here, the estimated point of regard 125 is placed over the representation 610fₘ, which is centrally located within the zone 300. Therefore, provided that the estimated point of regard 125 is stationary no further shifting occurs.

Figure 7c represents the same situation as figure 7a, however where a largest active region is allocated to a graphically modified representation 610eₘ of a manipulable object that adjoins a particular boundary side S_{B} of the modification zone 300.

Thereby, for example representations having been recently introduced into the zone 300 can be made relatively large while representations, such as 610cₘ, that are about to be shifted out from the zone 300 can be made relatively small. Hence, the definition of the particular boundary side S_{B} may be made adaptive in response to the shift direction S.

Furthermore, according to one preferred embodiment of the invention, the modification zone 300 may be shifted iteratively relative to the respective positions of objects in the array 310 on the display at a shifting speed, which depends on a control distance d_{C} between a user's estimated point of regard 125 in relation to a location of the modification zone 300. Here, a relatively long control distance d_{C} results in a comparatively high shifting speed, and vice versa, a relatively short control distance d_{C} results in a comparatively low shifting speed.

Additionally, the embodiments of the invention described above with reference to the figures 3a - 7c where either the modification zone 300 is shifted over the display and the objects in the array 310 are stationary, or conversely, the respective positions of the objects in the array 310 are shifted and the modification zone 300 is stationary may be combined in one and the same implementation. Namely, in some applications, it is desirable to allow both the modification zone 300 and the objects to move. For instance, when scrolling in the middle of the array 310 (as in the figure 4a) the modification zone 300 may have a fixed position on the display while the graphically modified representations of the objects slide through it. However, when the scrolling procedure approaches an end section of the array (as in the figure 3b), the objects' movement may stop while instead the modification zone 300 slides over the display towards the end of the array 310.

Now, referring to figures 8a - 8c, yet another proposed procedure of repositioning an array 310 of manipulable objects and a modification zone 300 in response to an eye-tracking data signal will be described. In this example, the array 310 of manipulable objects includes a set of objects, where each object 0, 10, 20, 30 and 40 respectively in the array 310 represents a selected example of an item in a logic sequence of items that contains a plurality of further items in addition to the items represented by the manipulable objects. Specifically, a number of the further items are logically organized sequentially between each object 0, 10, 20, 30 and 40 in the array 310. In an inactivated state, however, none of these further items are shown on the display.

In the figure 8a, we presume a start-up situation where the modification zone 300 is empty and the user's estimated point of regard 125 is placed in the array 310 somewhere between the manipulable objects 20 and 30. The figure 8b shows a later stage in the procedure, where the modification zone 300 shows graphically modified representations of a range of items logically organized between 20 and 30, namely 22, 23, 24, 25 and 26. Here, the representation 24 is centrally located within the zone 300 and the estimated point of regard 125 is placed over the representation 26 (i.e. to the right of the representation 24). The algorithm aims at shifting the respective position of the representations 22, 23, 24, 25 and 26 relative to the position of the modification zone 300 on the display, such that the estimated point of regard 125 coincides with the center of the zone 300. Therefore, the objects in the array 310 are shifted S left relative to the zone 300. In the figure 8c, the objects in the array 310 have been shifted such that the representation 26 now is centrally located in the zone 300 together with the estimated point of regard 125. Thus, no further shifting occurs. Here, the representation 24 instead constitutes a leftmost entity and a representation 28 constitutes a leftmost entity within the modification zone 300.

In the embodiment of the invention described above with reference to the figures 8a - 8c, the modification zone 300 is positioned relative to the objects in the array 310 of manipulable objects, such that the zone 300 always is positioned outside all the objects in the array 310. According to the invention, however, this strategy may be applied also when all the objects in the array 310 are shown on the display at start-up, i.e. as illustrated in the figures 5a and 5b. For instance, when being outside a user's estimated point of regard, the modification zone 300 may show a copy of the entire array 300, whereas when the user focuses his/her gaze in proximity to at a particular object in the array 310, the zone 300 shows an enlarged sub-set of objects around this particular object.

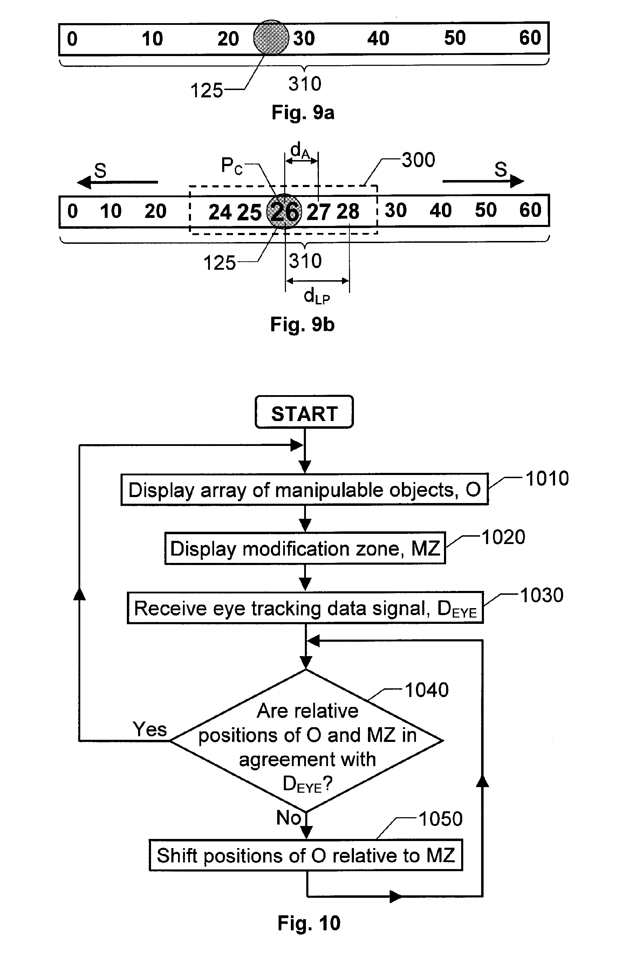

Figures 9a-b illustrate still another proposed procedure of repositioning an array 310 of manipulable objects 0, 10, 20, 30, 40, 50 and 60 respectively and a modification zone 300 in response to an eye-tracking data signal where the array 310 represents selected examples of items in a logic sequence of items that contains a plurality of further items in addition to the items represented by a set of initially shown manipulable objects.

In the figure 9a, we again assume that a user places his/her point of regard 125 somewhere between the manipulable objects 20 and 30. As a result thereof, a modification zone 300 is activated around a linearly interpolated position "26" of the user's estimated point of regard 125. This is shown in the figure 9b. Here, the zone 300 includes graphically modified representations 24, 25, 26, 27 and 28 respectively.

According to one preferred embodiment of the invention, the modification zone 300 is defined around the centrally located representation 26, such that the zone 300 includes graphical representations 24, 25 and 27, 28 which are organized within a logical proximity distance d_{LP} from this representation 26. Hence, in the this example, the logical proximity distance d_{LP} is two.

The introduction of the further objects 24,..., 28 between the objects 20 and 30 in the array 310 causes the objects 0, 10 and 20 to be shifted S left and the objects 30, 40, 50 and 60 to be shifted S right. Nevertheless, the overall length of the array 310 remains constant, so the distances between each of the objects 0, 10, 20 respective between each of the objects 30, 40, 50 and 60 are compressed.

In some applications, it is preferable to allocate a largest active region to the graphically modified representation 26 of a manipulable object, which is positioned closest to a center point P_{C} of the modification zone 300. Moreover, for a particular representation within the zone 300, say 27, the active region may depend on an activation distance d_{A} between this representation 27 and the representation having the largest active region, i.e. here 26. This means that the particular representation 27 is allocated a relatively large active area if the activation distance d_{A} is comparatively short, and vice versa, a relatively small active area is allocated if the activation distance d_{A} is comparatively long.

Finally, for clarity reasons, the modification zone 300 has been shown by means of a dashed line in all the embodiments of the invention illustrated in the figures 3a - 7c and 9b. According the invention, however, it is preferable if there is no explicit representation on the display of the zone itself in any of these embodiments.

Naturally, according to the invention, the above-mentioned further items in addition to those represented by the initially shown manipulable objects in the array, may be represented by a much more than numbers. For instance, X-ray images may constitute these further items, so that particular exemplary images between the head and the feet of a patient constitute a set of initially shown manipulable objects, and between each of these images a sub-set of "in-between-images" can be found. Alternatively, a head image, an arm image, and a leg image may constitute the initially shown manipulable objects in the array, and between these objects, additional head, arm and leg images can be found, and so on.

To sum up, the general method of controlling a computer apparatus according to the invention will now be described with reference to the flow diagram in figure 10.

An initial step 1010 displays an array of manipulable objects on a display of a computer system. Each object in this array extends over a respective idle region on the display and graphically represents a GUI-component controllable in response to an eye-tracking data signal that describes a user's point of regard on the display.

A step 1020 displays a modification zone on the display. the modification zone shows a graphically modified representation of at least one of the objects in the array of manipulable objects, either as an alternative or as a complement to the object itself. Each graphically modified representation extends over a respective active region within the modification zone which is larger than the idle region. Moreover, within the modification zone, exclusively objects in the array of manipulable objects are extended with respect to a covered area on the display, i.e. any portions of the display within the modification zone that represent non-manipulable objects are left unaffected, are partially or entirely hidden and/or are size-reduced.

A step 1030 receives an eye-tracking data signal, which describes a user's point of regard on the display. Of course, depending on the specific implementation, one or both of the steps 1020 and 1030 may be performed in parallel with the step 1010, e.g. so that the modification zone presented together with the array of manipulable objects.

Subsequently, a step 1040 checks whether the relative positions of the objects in the array and the position of the modification zone are in agreement with the eye-tracking data signal. Typically, this checking involves determining if the user's estimated point of regard is located at a particular position within the modification zone or not. Nevertheless, if an agreement between the relative positions of the objects in the array and the modification zone is found, the procedure returns to the step 1010, and otherwise a step 1050 follows.

In the step 1050, the position of at least one of the objects in the array and the modification zone is shifted in order improve the agreement of their relative positions and a control parameter given by the eye-tracking data signal. After that, the procedure loops back and returns to the step 1040.

All of the process steps, as well as any sub-sequence of steps, described with reference to the figure 10 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A computer system for displaying information comprising a display (120) and a data processing system (130), the data processing system (130) comprising:
an object displaying means (210) adapted to show an array (310) of manipulable objects (310a-310x; 610a-610j; 0-40; 0-60) on the display (120), each manipulable object extending over a respective idle region on the display (120), and graphically representing a GUI-component controllable in response to an eye-tracking data signal (D_{EYE}) describing a user's (110) point of regard (125) on the display (120),
an enlargement means (220) adapted to display a modification zone (300) on the display (120), the modification zone showing a graphically modified representation (310aₘ-310iₘ; 610cₘ-610iₘ; 22-28; 24-28) of at least one of the objects in the array of manipulable objects, each graphically modified representation extending over a respective active region within the modification zone which is larger than the idle region,
**characterized in that**
the data processing system comprises a repositioning means (240) adapted to shift (S) a respective position of the objects (310a-310x; 610a-610j; 0-40; 0-60) in the array (310) of manipulable objects relative to a position of the modification zone (300) on the display (120) in response to the eye-tracking data signal (D_{EYE}), and
the enlargement means (220) is adapted to exclusively cause a region extension on the display (120) in respect of the objects in the array (310) of manipulable objects.

2. The computer system according to claim 1, **characterized in that** the modification zone (300) has such dimensions in relation to a respective dimension of the graphically modified representations (310aₘ-310iₘ; 610cₘ-610iₘ; 22-28; 24-28) of the objects in the array (310) of manipulable objects that the zone (300) is capable of simultaneously showing representations of two or more of the objects in the array, and the enlargement means (220) is adapted to graphically modify each object within the modification zone (300) separately depending on the object's position relative to a boundary of the zone.

3. The computer system according to claim 2, **characterized in that** the enlargement means (220) is adapted to allocate a largest active region to a graphically modified representation (610dₘ) of a manipulable object which is positioned closest to a center point (P_{C}) of the modification zone (300).

4. The computer system according to claim 2, **characterized in that** the enlargement means (220) is adapted to allocate a largest active region to a graphically modified representation (610eₘ) of a manipulable object adjoining a particular boundary side (S_{B}) of the modification zone (300).

5. The computer system according to any one of the claims 2-4, **characterized in that** the enlargement means (220) is adapted to allocate an active region to a graphically modified representation (27) of a particular manipulable object within the modification zone (300) which active region depends on an activation distance (d_{A}) between the representation (27) and a representation (26) having a largest active region, such that the representation (27) of the particular manipulable object is allocated a relatively large active area if the activation distance (d_{A}) is comparatively short, and the representation (27) of the particular manipulable object is allocated a relatively small active area if the activation distance (d_{A}) is comparatively long.

6. The computer system according to any one of the preceding claims, **characterized in that** the repositioning means (240) is adapted to position the modification zone (300) relative to the objects in the array (310) of manipulable objects, such that the zone (300) always extends over at least one of the objects.

7. The computer system according to any one of the claims 1-5, **characterized in that** the repositioning means (240) is adapted to position the modification zone (300) relative to the objects in the array (310) of manipulable objects, such that the zone (300) always is positioned outside all the objects in the array (310).

8. The computer system according to any one of the preceding claims, **characterized in that** the repositioning means (240) is adapted to shift (S) the objects in the array (310) of manipulable objects relative to the modification zone (300) on the display (120), such that the objects are repositioned on the display (120) while the modification zone (300) is stationary at particular coordinates on the display (120).

9. The computer system according to any one of the preceding claims, **characterized in that** the repositioning means (240) is adapted to shift (S) the modification zone (300) relative to the objects in the array (310) of manipulable objects on the display (120), such that the modification zone (300) is repositioned on the display (120) while the objects are stationary at respective coordinates on the display (120).

10. The computer system according to any one of the preceding claims, **characterized in that** the repositioning means (240) is adapted to iteratively shift (S) the respective positions of the objects in the array (310) of manipulable objects relative to the position of the modification zone (300) on the display (120) at a shifting speed which depends on a control distance (d_{C}) between a user's (110) estimated point of regard (125) on the display (120) in relation to a location of the modification zone (300) on the display (120), such that a relatively long control distance (d_{C}) results in a comparatively high shifting speed, and a relatively short control distance (d_{C}) results in a comparatively low shifting speed.

11. The computer system according to any one of the preceding claims, **characterized in that**
each object (0-40; 0-60) in the array (310) of manipulable objects represents a selected example (0, 10, 20, 30, 40; 0, 10, 20, 30, 40, 50, 60) of an item in a logic sequence of items containing a plurality of further items in addition to the items represented by the manipulable objects, a number of the further items are logically organized sequentially between each object in the array of manipulable objects, and
the enlargement means (220) is adapted to display a graphical representation (24, 25; 27, 28) of at least one of the further items in the modification zone (300) which is organized within a logical proximity distance (d_{LP}) from a first object (26) in the array (310) of manipulable objects when the repositioning means (240) has positioned the modification zone (300) relative to the objects in the array (310) of manipulable objects such that the zone (300) displays the graphically modified representation of the first object (26).

12. The computer system according to any one of the preceding claims, **characterized in that** the data processing system (130) is associated with a selecting means (250) adapted to:
define an identified object in the array (310) of manipulable objects based on the eye-tracking data signal (D_{EYE}),
receive a user generated selection command (cmd_{SEL}) in respect of the identified object, and
effect at least one operation in the computer system in response to the selection command (cmd_{SEL}).

13. The computer system according to any one of the preceding claims, **characterized in that**
the object displaying means (210) is adapted to, outside the modification zone (300), show a first object (310a) and a second object (310b) in the array (310) of manipulable objects on the display (120) at an idle distance (d_{idle}) from one another, and
the enlargement means (220) is adapted to, within the modification zone (300), display a first graphically modified representation (310aₘ) of the first object (310a) and a second graphically modified representation (310bₘ) of the second object (310b), such that the first graphically modified representation (310aₘ) is separated from the second graphically modified representation (310bₘ) by an active distance (d_{active2}) exceeding the idle distance (d_{idle}).

14. A method of controlling a computer system to display information on a display (120), comprising:
displaying an array (310) of manipulable objects (310a-310x; 610a-610j; 0-40; 0-60) on the display (120), each manipulable object extending over a respective idle region on the display (120), and graphically representing a GUI-component controllable in response to an eye-tracking data signal (D_{EYE}) describing a user's (110) point of regard (125) on the display (120),
displaying a modification zone (300) on the display (120), the modification zone showing a graphically modified representation (310aₘ-310iₘ; 610cₘ-610iₘ; 22-28; 24-28) of at least one of the objects in the array of manipulable objects, each graphically modified representation extending over a respective active region within the modification zone which is larger than the idle region, **characterized by**
receiving the eye-tracking data signal (D_{EYE}),
shifting (S) a respective position of the objects (310a-310x; 610a-610j; 0-40; 0-60) in the array (310) of manipulable objects relative to a position of the modification zone (300) on the display (120) in response to the eye-tracking data signal (D_{EYE}), and
extending, within the modification zone (300) with respect to a covered area on the display (120), exclusively objects in the array (310) of manipulable objects.

15. The method according to claim 14, **characterized by** the modification zone (300) having such dimensions in relation to a respective dimension of the graphically modified representations (310aₘ-310iₘ; 610cₘ-610iₘ; 22-28; 24-28) of the objects in the array (310) of manipulable objects that the zone (300) is capable of simultaneously showing representations of two or more of the objects in the array (310), and the method comprising modifying graphically each object within the modification zone (310) separately depending on the object's position relative to a boundary of the zone (300).

16. The method according to claim 15, **characterized by** allocating a largest active region to a graphically modified representation (610dₘ) of a manipulable object which is positioned closest to a center point (P_{C}) of the modification zone (300).

17. The method according to claim 15, **characterized by** allocating a largest active region to a graphically modified representation (610eₘ) of a manipulable object adjoining a particular boundary side (S_{B}) of the modification zone (300).

18. The method according to any one of the claims 15-17, **characterized by** allocating an active region to a graphically modified representation (27) of particular manipulable object within the modification zone (300) which active region depends on an activation distance (d_{A}) between the representation (27) and a representation (26) having a largest active region, such that the representation (27) of the particular manipulable object is allocated a relatively large active area if the activation distance (d_{A}) is comparatively short, and the representation (27) of the particular manipulable object is allocated a relatively small active area if the activation distance (d_{A}) is comparatively long.

19. The method according to any one of the claims 14-18, **characterized by** positioning the modification zone (300) relative to the objects in the array (310) of manipulable objects, such that the zone (300) always extends over at least one of the objects.

20. The method according to any one of the claims 14-18, **characterized by** positioning the modification zone (300) relative to the objects in the array (310) of manipulable objects, such that the zone (300) always is positioned outside all the objects in the array (310).

21. The method according to any one of the claims 14-20, **characterized by** shifting (S) the objects in the array (310) of manipulable objects relative to the modification zone (300) on the display (120), such that the objects are repositioned on the display (120) while the modification zone (300) is stationary at particular coordinates on the display (120).

22. The method according to any one of the claims 14-21, **characterized by** shifting (S) the modification zone (300) relative to the objects in the array (310) of manipulable objects on the display (120), such that the modification zone (300) is repositioned on the display (120) while the objects are stationary at respective coordinates on the display (120).

23. The method according to any one of the claims 14-22, **characterized by** shifting (S), iteratively, the respective positions of the objects in the array (310) of manipulable objects relative to the position of the modification zone (300) on the display (120) at a shifting speed which depends on a control distance (d_{C}) between a user's (110) estimated point of regard (125) on the display (120) in relation to a location of the modification zone (300) on the display (120), such that a relatively long control distance (d_{C}) results in a comparatively high shifting speed, and a relatively short control distance (d_{C}) results in a comparatively low shifting speed.

24. The method according to any one of the claims 14-23, **characterized by** each object (0-40; 0-60) in the array (310) of manipulable objects represents a selected example (0, 10, 20, 30, 40; 0, 10, 20, 30, 40, 50, 60) of an item in a logic sequence of items containing a plurality of further items in addition to the items represented by the manipulable objects, a number of the further items are logically organized sequentially between each object in the array of manipulable objects, and the method comprising displaying in the modification zone (300) a graphical representation (24, 25; 27, 28) of at least one of the further items which is organized within a logical proximity distance (d_{LP}) from a first object (26) in the array (310) of manipulable objects when the modification zone (300) is positioned relative to the objects in the array (310) of manipulable objects, such that the zone (300) displays the graphically modified representation of the first object (26).

25. The method according to any one of the claims 14-24, **characterized by**
defining an identified object in the array (310) of manipulable objects based on the eye-tracking data signal (D_{EYE}),
receiving a user generated selection command (cmd_{SEL}) in respect of the identified object, and
effecting at least one operation in the computer system in response to the selection command (cmd_{SEL}).

26. The method according to any one of the claims 14-25, **characterized by**
showing, outside the modification zone (300), a first object (310a) and a second object (310b) in the array (310) of manipulable objects on the display (120) at an idle distance (d_{idle}) from one another, and
showing, within the modification zone (300), a first graphically modified representation (310aₘ) of the first object (310a) and a second graphically modified representation (310bₘ) of the second object (310b), such that the first graphically modified representation (310aₘ) is separated from the second graphically modified representation (310bₘ) by an active distance (d_{active2}) exceeding the idle distance (d_{idle}).

27. A computer program directly loadable into the internal memory (270) of a computer, comprising software for controlling the steps of any of the claims 14 - 26 when said program is run on the computer.

28. A computer readable medium (270), having a program recorded thereon, where the program is to make a computer control the steps of any of the claims 14 - 26.
